# FASCICULE DE BREVET EUROPEEN

(11) **EP 1 081 284 B1**
(45) Date de publication et mention de la délivrance du brevet: **02.01.2008**
(21) Numéro de dépôt: 99440240.2
(22) Date de dépôt: 31.08.1999
(51) Int. Cl.: D21H 27/40, B31F 1/07, B32B 29/00

(54) **Produit en papier absorbant comprenant au moins trois plis et son procédé de fabrication**
Saugfähiges, mindestens dreilagiges Papierprodukt und Verfahren zu seiner Herstellung
Absorbent paper product comprising at least three plies, and process for making the same

(43) Date de publication de la demande: 07.03.2001
(73) Titulaire: Georgia-Pacific France, 68320 Kunheim (FR)
(72) Inventeur: Hoeft, Benoît, 68320 Bischwihr (FR); Graff, Pierre, 68600 Wolfgantzen (FR)
(74) Mandataire: Nuss, Pierre

(56) Documents cités:
- EP-A- 0 564 319
- WO-A-93/11929
- WO-A-97/08386
- US-A- 3 414 459

## Description

La présente invention concerne les produits en papier absorbant et plus particulièrement en ouate de cellulose, à usage sanitaire ou domestique. Elle vise essentiellement le papier toilette, mais peut aussi concerner les papiers ménagers tels que l'essuie-tout, l'essuie-mains, les serviettes de table, les mouchoirs en papier ou autres.

Ces produits sont pour la plupart constitués d'un ou de plusieurs plis ou feuilles superposées en ouate de cellulose, les plis pouvant être associés par liaison entre eux.

Dans le cas du papier toilette, des produits classiques comprennent deux ou trois, voire quatre plis associés.

La présente invention se rapporte plus précisément à un produit constitué d'au moins trois plis et au procédé de fabrication d'un tel produit.

Le brevet américain n° 3 414 459 décrit une structure en papier absorbant comprenant au moins deux plis. On y mentionne également un produit comprenant trois plis associés, un troisième pli étant intercalé entre deux plis externes gaufrés. Cette structure est préparée à partir de plis d'un grammage d'environ 17 g/m² chacun. Suivant le procédé de fabrication décrit dans ce brevet, on gaufre les deux plis externes séparément avec un motif en relief consistant en des protubérances discrètes. On fait passer chacun des plis entre un cylindre métallique gravé en relief selon le motif souhaité et un cylindre lisse en caoutchouc. Chaque pli gaufré ainsi obtenu présente de manière générale un motif répété de 3 à 30 protubérances ou picots en relief par unité de surface, ici par cm².

Pour les structures composées de trois plis, illustrées dans ce brevet américain, la densité des motifs, c'est-à-dire le nombre de protubérances par unité de surface, est d'environ 11 protubérances/cm².

Le troisième pli non gaufré est intercalé entre les deux plis gaufrés et est plus précisément disposé entre les surfaces distales ou sommets des protubérances de chacun des plis. En d'autres termes, les protubérances sont orientées vers l'intérieur de la structure. On associe les trois plis en faisant passer ces derniers dans l'intervalle de serrage ménagé entre les deux cylindres métalliques gravés de chacun des dispositifs de gaufrage prévus pour les plis externes. Les éléments en relief ou bossages de chacun des cylindres gravés se placent face à face. Cette technique d'association est plus généralement dénommée association "pointe-pointe" (pointe contre pointe). La liaison des trois plis est assurée dans le cas de ce brevet américain par l'application d'une pression suffisamment élevée pour créer des liaisons interfibres ; aucun adhésif n'est appliqué sur les surfaces distales des motifs des protubérances des plis externes.

Mais le mode de fabrication décrit dans ce brevet antérieur entraîne une usure rapide des cylindres de gaufrage en raison de la pression de serrage élevée qu'il est nécessaire d'exercer pour l'association des trois plis.

Par ailleurs, la structure décrite dans le brevet américain présente une faible densité de motifs (de l'ordre de 10 à 15 protubérances/cm²). Les produits à trois plis présentant cette structure sont principalement destinés à être utilisés comme chiffon d'essuyage ou essuie-tout ménager, produits pour lesquels la résistance et surtout l'absorption sont les premières qualités recherchées. Pour cette raison les motifs de gaufrage sont relativement profonds, et par conséquent de faible densité.

D'autres produits en papier absorbant sont constitués de trois plis associés selon une technique d'association différente. Ainsi, il existe des produits dans lesquels on gaufre, d'une part, un ensemble de deux plis superposés et d'autre part un troisième pli au moyen de deux dispositifs distincts de gaufrage. Les deux premiers plis superposés ainsi que le troisième pli sont gaufrés selon des motifs en relief constitués de protubérances. La densité des motifs reste nécessairement faible, c'est-à-dire inférieure à 20 protubérances/cm² pour ce type de produit. En effet, les deux plis superposés et le troisième pli sont associés au moyen d'un cylindre marieur de manière que les surfaces distales des protubérances des deux plis superposés soient disposées en face des surfaces situées entre deux protubérances dans le plan du troisième pli. Cette technique est encore appelée procédé "emboîté" ou "nested".

Dans le texte qui suit, on étend la définition du terme "emboîté" ou « nested » au cas où le plan de liaison entre la surface distale des protubérances d'un premier pli gaufré et d'un second pli, se situe dans le même plan que le plan dudit second pli quelle que soit la position relative de la surface distale par rapport aux protubérances du second pli. Ainsi celle-ci peut se retrouver entre deux protubérances du second pli mais aussi recouvrir en partie ou totalement une de ces protubérances qui est de ce fait écrasée.

Un procédé d'association de trois plis de ce type est décrit dans la demande de brevet européen n° 0 570 578.

Le procédé qui y est décrit consiste à gaufrer séparément une première et une seconde feuille, cette dernière étant constituée de la superposition de deux feuilles, au moyen d'un premier et deuxième dispositif de gaufrage comportant un motif de gaufrage de densité inférieure à 20 protubérances/cm², à appliquer au moins partiellement un adhésif sur les sommets des protubérances formées sur la première ou seconde feuille et à assembler les deux feuilles au moyen d'un cylindre marieur non résilient disposé parallèlement à l'un des cylindres gravés d'un dispositif de gaufrage de sorte que leurs protubérances soient emboîtées. Dans ce procédé, le cylindre marieur est maintenu en butée à une distance minimale prédéterminée du cylindre gravé.

Avec une structure telle que décrite dans cette demande européenne, on cherche à obtenir des produits épais ayant une bonne main. Cependant, surtout pour l'application au papier toilette, la douceur n'est pas optimale en raison du gaufrage relativement grossier. En outre, il est nécessaire de gaufrer fortement pour obtenir l'épaisseur importante souhaitée.

Enfin, d'autres produits complexes constitués de trois plis ont été décrits.

Par exemple, la demande de brevet européen n° 0 564 319 décrit un produit comprenant trois plis gaufrés séparément et associés successivement. Plus précisément, on crée par gaufrage des petites et grandes protubérances sur un premier pli. On crée par gaufrage séparément des protubérances sur un deuxième pli. Celles-ci sont séparées entre elles par la même distance que les petites protubérances du premier pli et ont une hauteur telle que la somme de leur hauteur et celle des petites protubérances du premier pli soit au moins égale à la hauteur d'une grande protubérance du premier pli. On encolle les extrémités des protubérances du deuxième pli, puis on réalise un matelas entre les premier et deuxième plis en superposant les extrémités des petites protubérances du premier pli avec les extrémités des protubérances du deuxième pli en position pointe-pointe, les grandes protubérances du premier pli venant s'emboîter entre les protubérances du deuxième pli.

On réalise par ailleurs le gaufrage séparé d'un troisième pli, ce gaufrage présentant un pas identique à celui des grandes protubérances du premier pli. On encolle les extrémités des protubérances du troisième pli et on assemble le troisième pli et le matelas formé entre les deux premiers plis de façon que les extrémités des protubérances du troisième pli viennent se coller en position pointe-pointe sur le deuxième pli au niveau des grandes protubérances du premier pli.

Le produit ainsi obtenu présente une épaisseur et une rigidité améliorées mais a une structure relativement complexe nécessitant plusieurs niveaux d'encollage. Le procédé est aussi assez compliqué à mettre en oeuvre et implique une installation industrielle relativement complexe.

Par ailleurs, le procédé précité ne permet de fabriquer que des produits gaufrés ayant une densité de motifs inférieure à 20 protubérances/cm² et l'épaisseur des produits ainsi obtenus, constitués de trois feuilles, n'est pas optimisée.

Finalement, on connaît d'après la demande de brevet français n° 98 02792, un produit en papier absorbant comprenant trois plis, qui est à la fois épais et doux, qui présente une bonne main et qui résiste à l'écrasement.

Dans cette demande, le produit présente deux plis externes gaufrés comportant chacun des motifs en relief consistant au moins en partie en des protubérances discrètes orientées vers l'intérieur de la structure et un pli central, les plis étant associés par liaison des surfaces distales d'au moins une partie des protubérances de chacun desdits plis externes audit pli central. Ce produit est caractérisé en ce que chacun desdits plis externes gaufrés est lié au moyen d'un adhésif audit pli central, et au moins l'un des plis a une densité de motifs supérieure à 30 protubérances/cm².

L'un des plis peut également comprendre des motifs combinés, par exemple à deux hauteurs différentes par rapport au plan de référence du pli.

Cependant, le mode de liaison entre les différents plis est du type "pointe-pointe" avec tous les inconvénients liés à ce mode de liaison.

La présente invention a pour objet de pallier l'ensemble des inconvénients précités, concernant tant les produits que leur procédé de fabrication.

Elle a également pour objet de fournir un nouveau produit constitué d'au moins trois plis qui soit épais et doux, présentant une bonne main, et résistant à l'écrasement une fois mis en rouleau.

L'invention a pour objet un produit en papier absorbant d'un grammage d'environ 36 à environ 105 g/m² comprenant au moins trois plis, deux plis externes, inférieur et supérieur, gaufrés, comportant chacun des motifs en relief consistant au moins en partie en des protubérances discrètes, et un pli central, les surfaces distales d'au moins une partie des protubérances de chacun desdits plis externes étant tournées vers le pli central, et au moins l'un des plis externes ayant une densité de motifs supérieure à 30 protubérances/cm², le pli externe inférieur gaufré présentant un premier et un second motifs, le second motif ayant une hauteur inférieure à celle du premier motif, caractérisé en ce que le pli central et le pli externe supérieur gaufré sont associés dans un mode dit "emboîté" audit pli externe inférieur gaufré, au niveau d'au moins une partie des sommets du premier motif dudit pli externe inférieur gaufré.

Une telle structure allie à la fois de manière surprenante, une plus grande douceur et une plus grande épaisseur. En effet, le gaufrage fin d'une part, confère à la surface externe de la feuille finie une grande douceur au toucher, et, d'autre part, offre une très bonne résistance à l'écrasement. Cette dernière propriété est renforcée par le pli central qui empêche toute imbrication des deux plis externes entre eux, phénomène qui se produirait si ce pli n'existait pas, en raison de la faible surface d'appui qu'offrent des protubérances aussi fines.

L'invention a encore pour objet de fournir un nouveau produit constitué d'au moins trois plis, du type dit "emboîté" ou "nested", utilisé comme papier toilette, serviette de table, mouchoir, essuie-tout ou analogue.

L'invention a également pour objet un procédé de fabrication permettant d'obtenir un produit en papier absorbant comprenant au moins trois plis liés, chacun desdits plis ayant un grammage d'environ 12 à environ 35 g/m² et de préférence de 12 à 25 g/m², caractérisé en ce qu'il consiste à :
- Gaufrer un premier pli externe sur un cylindre de gaufrage présentant au moins un motif en relief constitué au moins en partie de picots de hauteur H1 pour obtenir sur le pli un premier motif constitué de protubérances ;
- Superposer un pli central sur lesdites protubérances du premier pli externe gaufré ;
- Gaufrer un second pli externe sur un cylindre de gaufrage présentant un motif en relief constitué au moins en partie de picots de hauteur h'1 ;
- Associer le premier pli externe gaufré muni du pli central avec le second pli externe gaufré, au moyen d'un cylindre marieur, selon le mode dit "emboîté" et
- Exercer une pression suffisante pour assurer la liaison des trois plis précités.

D'autres caractéristiques et avantages de l'invention apparaîtront à la lecture détaillée de la description qui suit en référence aux dessins annexés dans lesquels :
- la figure 1 représente une vue en coupe de la structure d'un produit selon l'invention, et
- la figure 2 représente schématiquement le principe du procédé de fabrication selon l'invention.

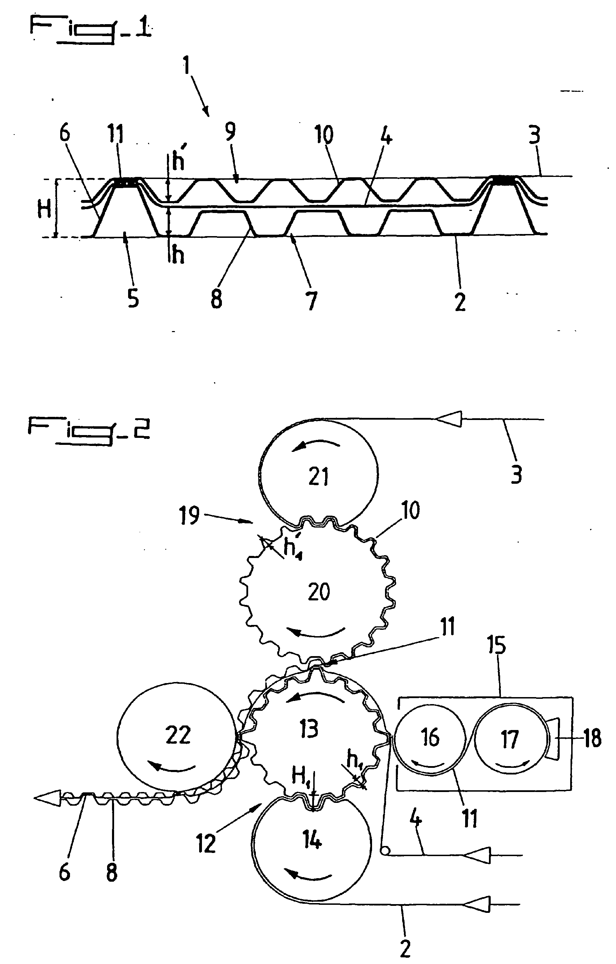

En référence à la figure 1, le produit 1 selon l'invention est un produit en papier absorbant d'un grammage d'environ 36 à environ 105 g/m² comprenant au moins trois plis 2, 3 ou 4, deux plis externes gaufrés, l'un inférieur 2 et l'autre supérieur 3 comprenant chacun des motifs 5, 7 et 9 en relief consistant au moins en partie en des protubérances discrètes 6, 8 et 10, et un pli central 4. Les protubérances sont tournées vers le pli central 4. Les plis 2, 3 et 4 sont associés par liaison des surfaces distales d'au moins une partie des protubérances 6 du pli 2 et d'au moins une partie des surfaces situées entre deux protubérances 10 du pli 3 audit pli central 4. Au moins l'un des plis externes 2 et 3 a une densité de motifs 5, 7 et 9, supérieure à 30 protubérances/cm². Le pli externe inférieur gaufré 2 présente des motifs combinés hauts 5 et bas 7. Selon une caractéristique de l'invention, le pli central 4 et le pli externe supérieur gaufré 3 sont associés dans un mode dit "emboîté" ou "nested", au niveau d'au moins une partie des sommets du motif haut 5 du pli externe inférieur gaufré 2.

Le premier pli externe inférieur gaufré 2 comprend un motif combiné, constitué, par exemple, d'un motif haut 5 formé de protubérances hautes 6 avec un motif bas 7 formé de protubérances basses 8.

Les protubérances hautes 6 du motif haut 5 ont des hauteurs H et les protubérances basses 8 du motif bas 7 ont des hauteurs h inférieures à celles des protubérances hautes 6, de sorte que H > h (cf. figure 1).

De manière avantageuse, et comme illustré sur la figure 1, le second pli externe supérieur gaufré 3 comprend un motif 9 simple, par exemple réalisé sous la forme de protubérances 10 de hauteur h'.

Bien entendu, le second pli externe supérieur gaufré 3 peut également comprendre un motif combiné à l'instar du motif gaufré combiné du pli inférieur 2, par exemple réalisé sous la forme de protubérances à deux hauteurs différentes.

Le produit selon l'invention a un grammage d'environ 36 à 105 g/m². Chacun des plis a un grammage d'environ 12 à environ 35 g/m² et de préférence de 12 à 25 g/m².

Comme on peut le voir sur la figure 1, les protubérances 6, 8 et 10 de chaque pli externe gaufré 2 et 3 sont orientées vers le pli central. De plus, comme le montre également la figure 1, dans cet exemple de réalisation les densités ou pas des différents motifs 5, 7 ou 9 (protubérances 6, 8 et 10) sont différents d'un pli externe gaufré 2 à l'autre 3. Par ailleurs la liaison entre les plis externes gaufrés inférieur 2, supérieur 3 et le pli central 4 ne se fait qu'au niveau des protubérances hautes 6, les plis 2, 3 et 4 y étant associés selon le mode "emboîté". Dans la présente demande le terme « emboîté » s'étend à la réalisation où le plan des surfaces distales des protubérances 6 correspond à celui du pli 3 sans qu'il soit nécessaire que le sommet des protubérances 6 vienne s'intercaler précisément entre deux protubérances 10.

Au moins l'un des plis externes gaufrés 2, 3 a une densité de motifs 5, 7 ou 9 supérieure à 30 protubérances/cm² et inférieure à 300. De manière avantageuse chacun des plis externes gaufrés 2 ou 3 a une densité totale de motifs 5, 7 ou 9 inférieure à 150 et de préférence inférieure à 90 protubérances/cm².

Les densités des motifs 5, 7 ou 9 des plis externes gaufrés 2, 3 peuvent être identiques ou différentes. Dans le mode réalisation représenté elles sont différentes.

Comme on le voit sur la figure 1, la différence de hauteur H-h entre le motif haut 5 réalisé sous la forme de protubérances 6 et le motif bas 7 réalisé sous la forme de protubérances 8 du pli externe inférieur gaufré 2 est sensiblement égale à la hauteur h' du motif 9, réalisé sous la forme de protubérances 10, du pli externe supérieur gaufré 3 lié avec le motif haut 5 (les protubérances 6) dudit pli externe inférieur gaufré 2. Il faut cependant tenir compte de l'épaisseur du pli central qui n'est pas négligeable, de l'ordre de 0,1 mm au regard d'une épaisseur totale de la feuille de 0,6 mm.

Dans un procédé "pointe-pointe" avec un motif à deux niveaux, l'épaisseur qui serait obtenue avec le motif 5 le plus haut s'écraserait lors de l'enroulement pour être ramenée à la hauteur du motif inférieur. Dans ce cas, le "sur-gaufrage" réalisé ne servirait qu'à permettre un dépôt de la colle uniquement sur la partie haute du motif.

Dans le cas du procédé selon la présente invention, le "sur-gaufrage" réalisé sert à loger les deux autres plis. De ce fait, pour un même motif et à hauteur de gaufrage identique, il n'y a pas de différence de caractéristiques physiques notable dans le produit 1 fini, selon l'invention, par rapport à un produit de type "pointe-pointe".

Dans un autre mode de réalisation non représenté, un produit selon la présente invention est caractérisé en ce que le pli externe supérieur gaufré 3 comporte, outre le motif 9 de hauteur h' lié au motif 5 du pli externe inférieur gaufré 2 et au pli central 4, un motif de hauteur différente de celle dudit motif 9 qui n'est pas lié auxdits plis central 4 et externe inférieur gaufré 2.

Le produit 1 selon l'invention comprend une couche d'adhésif 11 disposée entre le pli externe supérieur gaufré 3 et le pli central 4. Selon une forme préférée de l'invention cet adhésif est disposé au niveau des protubérances 6.

Le pli central 4 peut posséder des propriétés physico-chimiques qui le distinguent des plis externes gaufrés 2 ou 3.

Ainsi, le grammage du pli central 4 peut être différent du grammage d'au moins un des plis externes gaufrés 2, 3, ce qui permet de réduire le coût de fabrication du produit papier sans en affecter son aspect esthétique extérieur.

De même, la composition fibreuse et/ou chimique du pli central 4 peut être choisie différente de celle d'au moins un des plis externes gaufrés 2, 3 permettant ainsi d'adapter la résistance du produit selon l'invention aux usages pour lesquels il est prévu sans détériorer la douceur.

Le choix de fibres du pli central 4 permet également d'influencer la résistance du produit selon l'invention, par exemple en faisant en sorte qu'au moins l'un des plis externes gaufrés 2, 3 présente une composition fibreuse essentiellement à base de fibres courtes et en ce que le pli central 4 présente une composition fibreuse essentiellement à base de fibres longues.

Cette combinaison permet donc d'obtenir un produit 1 résistant sans sacrifier à la douceur apportée par les fibres courtes.

De manière avantageuse, un produit selon l'invention est caractérisé en ce que la résistance au délaminage d'un des plis externes gaufrés 2, 3 avec le pli central 4 est substantiellement différente de la résistance au délaminage de l'autre des plis externes gaufrés 2, 3 avec ledit pli central 4.

Selon une autre variante, le pli central 4 comprend un agent résistant humide temporaire ou permanent.

Si cet additif est déjà présent dans une certaine quantité dans chacun des plis externes gaufrés 2, 3, le pli central 4 pourra en contenir une quantité plus importante.

Un exemple d'additif résistant humide est un composé du type polyamine épichlorhydrine, commercialisé sous le nom de KYMENE SLX par la société HERCULES. Les plis externes gaufrés 2, 3 peuvent quant à eux comprendre un adoucissant ou déliant. La feuille multi-plis, ainsi constituée, présentera une très bonne résistance humide et donc une bonne solidité du fait en particulier de la composition du pli central 4. Elle offre par ailleurs une douceur de surface par le choix de la composition fibreuse et chimique des deux plis externes gaufrés 2, 3.

Chaque pli 2, 3 ou 4 peut encore être constitué d'une ou de plusieurs couches formant un stratifié. Dans ce cas, lesdites couches peuvent également avoir une composition fibreuse et/ou chimique différente.

L'épaisseur perçue d'une feuille selon l'invention est comparable à l'épaisseur perçue d'une feuille d'un produit trois plis réalisé selon la demande de brevet français n° 98 02792 qui emploie la technique "pointe-pointe".

Afin d'améliorer encore la souplesse et la douceur au toucher du produit 1 de la présente invention, on peut envisager qu'au moins l'un des plis externes gaufrés 2, 3 comprenne un adoucissant.

Selon une autre caractéristique, au moins l'un des plis comprend un agent hydrophobe.

On fabrique le produit 1 illustré à la figure 1 suivant un procédé dont le principe est illustré à la figure 2.

En référence à la figure 2, le premier pli externe inférieur 2 est gaufré dans un premier dispositif de gaufrage 12 constitué d'un cylindre gravé 13 et d'un contre-cylindre 14 en caoutchouc tournant dans des sens opposés. Le cylindre 13 est gravé selon un premier motif haut avec des picots de hauteur Hlet un motif moins haut avec des picots de hauteur h1.

Grâce à la gravure à deux niveaux du cylindre 13 on obtient sur le premier pli externe inférieur 2, des motifs 5, 7 en relief consistant au moins en partie en des protubérances 6 discrètes hautes de hauteur H, par exemple des picots et/ou des fleurs, et en des protubérances 8 basses de hauteur h, par exemple des picots. Les hauteurs H et h dépendent des profondeurs H1 et h1 des gravures, et aussi des autres paramètres du gaufrage: pression, qualité du caoutchouc, etc.

Préférentiellement, les picots du premier motif sur le cylindre 13 ont hauteur de gravure H1 comprise entre 0,2 mm et 2 mm et les picots du second motif ont une hauteur de gravure h1 telle que la différence de hauteur H1-h1 est comprise entre 0,1 mm et 0,7 mm.

Le pli central 4 est amené, de préférence non préalablement gaufré, et superposé sur les protubérances 6, 8 du premier pli externe inférieur gaufré 2 au niveau du cylindre gravé 13. Le pli central 4 épouse ainsi, du fait notamment de son propre poids, les protubérances hautes 6 du pli externe inférieur gaufré 2 tout en restant sensiblement plan entre deux protubérances hautes 6 consécutives, les surfaces plates des protubérances basses 8 pouvant servir de supports d'appui intermédiaires (cf. figure 1).

On applique au niveau de cette rencontre dudit pli externe inférieur gaufré 2 avec le pli central 4, un adhésif 11 sur la face extérieure dudit pli central 4, par l'intermédiaire d'un dispositif encolleur 15 (cf. figure 2).

Parallèlement, on gaufre séparément un second pli externe supérieur 3 avec un motif 9 en relief consistant au moins en partie en des protubérances 10 discrètes de hauteur h', par l'intermédiaire d'un second dispositif de gaufrage 19. Ce dernier comprend un cylindre 20, gravé avec un motif présentant des picots de hauteur h'1, et un contre-cylindre 21 en caoutchouc tournant dans des sens opposés.

Le second cylindre de gaufrage peut être réalisé, soit avec une gravure uniforme à une hauteur, soit avec une gravure comprenant en alternance des zones avec un motif et des zones lisses sans motif. Les zones sans motif sont alors placées en vis à vis des picots de hauteur H1 de l'autre cylindre (fleurs ou gros picots) lors de l'association.

Le second cylindre peut aussi comporter des motifs à vocation esthétique, comme par exemple des fleurs, à la seule condition que ces motifs ne soient pas placés en vis à vis des picots de hauteur H1 pour éviter l'écrasement.

Une fois que l'adhésif 11 a été appliqué sur la surface du pli central 4, superposé au premier pli externe inférieur gaufré 2, le second pli externe supérieur gaufré 3 et les plis 2 et 4 précités sont associés au moyen d'un dispositif d'association ou cylindre marieur 22, par la technique dite "emboîtée" ou "nested". Le cylindre marieur 22 peut être à surface lisse mais aussi à surface gravée, présentant des lacunes, si l'on souhaite réduire la surface liée et améliorer la souplesse du produit fini.

L'association du premier pli externe inférieur gaufré 2 muni du pli central 4 encollé avec le second pli externe supérieur gaufré 3, est faite de manière que les surfaces distales des protubérances hautes 6 du premier pli externe inférieur gaufré 2 viennent s'emboîter au moins en partie avec les surfaces distales des protubérances 10 du second pli externe supérieur gaufré 3, selon le mode dit "emboîté" ou "nested" et par l'exercice d'une pression suffisante pour assurer la liaison des trois plis 2, 3 et 4 par ledit adhésif 11.

Dans un mode de réalisation préférentiel, on applique l'adhésif 11 sur la surface externe du pli central 4 en vis-à-vis des surfaces distales du premier motif 5 du pli externe inférieur gaufré 2.

Comme le montre la figure 2, on applique l'adhésif 11 au moyen d'un dispositif encolleur 15 comprenant un cylindre applicateur 16. Le cylindre applicateur 16 vient en appui sur le cylindre gravé 13 par l'intermédiaire du pli central 4 et du pli externe inférieur gaufré 2 superposés, un cylindre plongeur 17 transférant l'adhésif 11 sur le cylindre applicateur 16. Le cylindre plongeur 17 prélève l'adhésif 11 dans un bac 18. Le cylindre applicateur 16 exerce une certaine pression sur le cylindre gravé 13 au niveau de la surface distale des protubérances hautes 6 du pli externe inférieur gaufré 2. Avec une pression suffisante, la colle traverse le pli central, et l'association des plis en est améliorée. On gaufre ainsi légèrement le pli central. Dans une variante de réalisation, le cylindre applicateur de colle peut présenter sur une surface gravée dans le but de n'appliquer de la colle que sur une partie seulement des sommets. On améliore ainsi la souplesse du produit fini.

La surface de collage étant limitée aux surfaces planes distales des protubérances hautes 6 du pli externe inférieur gaufré 2, lesquelles sont présentes dans la figure 2 à raison d'une protubérance haute 6 pour trois protubérances basses 8, la rigidité du produit 1 résultant peut être avantageusement prédéterminée et, par exemple, diminuée en fonction des besoins.

L'adhésif 11 utilisé peut être une colle standard de type PVA ou thermofusible (hotmelt). On a utilisé à titre d'exemple une colle commercialisée par la société SWIFT. Cette colle a été diluée à l'eau dans des proportions optimales pour obtenir le transfert approprié sur les plis.

Selon un autre mode de réalisation, on pulvérise par des moyens appropriés une colle "hotmelt" sur chacune des faces du pli central 4. Dans ce cas il faut appliquer la colle avant que le pli central vienne au contact des deux plis externes.

Selon un autre mode de réalisation, on applique un adhésif aqueux par pulvérisation sur le pli central 4.

Il apparaît que le procédé pour la réalisation d'un papier à trois plis permet d'utiliser une installation prévue pour la fabrication d'un papier deux plis "emboîté" traditionnel sans avoir à modifier sensiblement les éléments et les réglages.

Pour le procédé de la présente invention, le procédé de base utilisé est le procédé dit "emboîté" ou "nested" dans lequel on a effectué les modifications suivantes :
- les motifs utilisés dans le procédé de la présente invention sont des motifs habituellement utilisés dans les procédés "pointe-pointe", à savoir des motifs présentant une densité supérieure à 20 protubérances/cm².
- l'ajout d'un pli central entre les deux plis externes gaufrés. Ceci n'est pas possible pour des produits assemblés selon un procédé exclusivement "nested", car celui-ci empêche les plis gaufrés de bien s'imbriquer l'un dans l'autre, ce qui entraîne un écrasement du produit, étant donné que c'est l'imbrication des deux plis qui garantit une bonne tenue à l'écrasement.

Le procédé selon l'invention permet de réaliser des produits ayant les caractéristiques d'un produit obtenu par un procédé "pointe-pointe" (douceur due aux motifs à densité élevée, aspect plus fin et plus élégant) en éliminant les inconvénients liés à ce type de procédé, à savoir l'usure des cylindres en acier ainsi que leurs conséquences néfastes (entretien et réparation fréquents, qualité non constante, baisse de la productivité...).

De plus, la fabrication des cylindres gravés utilisés dans le cadre du procédé de la présente invention peut être simplifiée, ceux-ci nécessitant des tolérances géométriques de fabrication moins strictes que par rapport à une installation pointe-pointe, le caoutchouc du cylindre marieur s'adaptant plus facilement à d'éventuelles variations sur le cylindre gravé.

Lorsqu'on souhaite modifier l'apparence du produit conforme à la présente invention, il suffit de changer le cylindre 13 avec les motifs combinés hauts et bas (5 et 7), le cylindre 20 avec le motif 9 du pli externe inférieur gaufré 2 pouvant être gardé. Cela est d'autant plus vrai si l'on utilise de la colle colorée grâce à laquelle on retrouve le motif "imprimé" sur le pli externe supérieur gaufré 3.

Le procédé de la présente invention permet également, de manière avantageuse, le maintien du "sur-gaufrage" d'un motif à deux hauteurs par remplissage avec deux autres plis et un meilleur aspect visuel par maintien du marquage obtenu par ledit "sur-gaufrage".

Le produit de la présente invention ou obtenu suivant le procédé de la présente invention peut être utilisé comme papier toilette, comme serviette de table, mouchoir, essuie-tout ou analogues.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Produit en papier absorbant d'un grammage d'environ 36 à environ 105 g/m² comprenant au moins trois plis, deux plis externes, inférieur et supérieur, gaufrés, comportant chacun des motifs en relief consistant au moins en partie en des protubérances discrètes, et un pli central, les surfaces distales d'au moins une partie des protubérances de chacun desdits plis externes étant tournées vers le pli central, et au moins l'un des plis externes ayant une densité de motifs supérieure à 30 protubérances/cm², le pli externe inférieur gaufré (2) présentant un premier (5) et un second (7) motif, le second motif ayant une hauteur inférieure à celle du premier motif, **caractérisé en ce que** le pli central (4) et le pli externe supérieur gaufré (3) sont associés dans un mode dit "emboîté" audit pli externe inférieur gaufré (2), au niveau d'au moins une partie des sommets du premier motif (5) dudit pli externe inférieur gaufré (2).

2. Produit selon la revendication 1, **caractérisé en ce que** les trois plis sont liés par adhésif (11) au niveau du premier motif (5).

3. Produit selon l'une des revendications 1 à 2, **caractérisé en ce que** chacun des plis externes gaufrés (2, 3) a une densité totale de motifs (5, 7, 9) inférieure à 150 de préférence à 90 protubérances/cm².

4. Produit selon l'une quelconque des revendications 1 à 3, **caractérisé en ce que** les densités des motifs (5, 7, 9) des plis externes gaufrés sont différentes.

5. Produit selon la revendication 1, **caractérisé en ce que** le pli externe supérieur gaufré (3) comporte, un second motif de hauteur différente de celle du motif (9).

6. Produit selon l'une des revendications 1 à 5, **caractérisé en ce que** le grammage du pli central (4) est différent du grammage d'au moins un des plis externes gaufrés (2, 3).

7. Produit selon l'une quelconque des revendications 1 à 6, **caractérisé en ce que** la composition fibreuse et/ou chimique du pli central (4) est différente de celle d'au moins un des plis externes gaufrés (2, 3).

8. Produit selon l'une quelconque des revendications 1 à 7, **caractérisé en ce qu'**au moins l'un des plis externes gaufrés (2, 3) présente une composition fibreuse essentiellement à base de fibres courtes et **en ce que** le pli central (4) présente une composition fibreuse essentiellement à base de fibres longues.

9. Produit selon l'une quelconque des revendications 1 à 8, **caractérisé en ce qu'**au moins l'un des plis externes gaufrés (2, 3) comprend un adoucissant.

10. Produit selon l'une quelconque des revendications 1 à 9, **caractérisé en ce qu'**au moins l'un des plis comprend un agent hydrophobe.

11. Produit selon l'une quelconque des revendications 1 à 10, **caractérisé en ce que** le pli central (4) comprend un agent résistant humide temporaire ou permanent.

12. Procédé de fabrication d'un produit en papier absorbant selon l'une quelconque des revendications 1 à 11 et comprenant au moins trois plis liés (2, 3, 4), chacun desdits plis ayant un grammage d'environ 12 à environ 35 g/m² et de préférence de 12 à 25 g/m², **caractérisé en ce qu'**il consiste à :
- Gaufrer un premier pli externe (2) sur un cylindre de gaufrage (13) présentant au moins un motif en relief constitué au moins en partie de picots de hauteur H1 pour obtenir sur le pli, un premier motif (5) constitué de protubérances (6).
- Superposer un pli central (4) sur lesdites protubérances (6) du premier pli externe gaufré (2) ;
- Gaufrer un second pli externe (3) sur un cylindre de gaufrage (20) présentant un motif (9) en relief constitué au moins en partie de picots de hauteur h'1;
- Associer le premier pli externe gaufré (2) muni du pli central (4) avec le second pli externe gaufré (3), au moyen d'un cylindre marieur (22), selon le mode dit "emboîté" et
- Exercer une pression suffisante pour assurer la liaison des trois plis (2, 3, 4) précités.

13. Procédé selon la revendication 12, **caractérisé en ce qu'**on applique un adhésif (11) sur la surface externe du pli central (4) en vis-à-vis des surfaces distales du premier motif (5) du pli externe (2) inférieur gaufré.

14. Procédé selon la revendication 13, **caractérisé en ce qu'**on applique l'adhésif (11) au moyen d'un dispositif encolleur (15) comprenant un cylindre applicateur (16).

15. Procédé selon l'une quelconque des revendications 12 à 14, **caractérisé en ce que** le cylindre (13) présente un second motif constitué de picots à un niveau h1 inférieur aux premiers de hauteur H1.

16. Procédé selon la revendication 15 **caractérisé en ce que** les picots du premier motif sur le cylindre (13) ont hauteur de gravure H1 comprise entre 0,2 mm et 2 mm et les picots du second motif ont une hauteur de gravure h1 telle que la différence de hauteur H1-h1 est comprise entre 0,1 mm et 0,7 mm.

17. Procédé selon la revendication 12, **caractérisé en ce qu'**on applique un adhésif aqueux ou hot-melt par pulvérisation pour assurer la liaison entre les plis.

18. Utilisation du produit selon l'une des revendications 1 à 11 ou obtenu suivant le procédé selon l'une des revendications 12 à 17, comme papier toilette, serviette de table, mouchoir, essuie-tout ou analogues.

## Claims

1. Product made of absorbent paper with a mass per unit area or gram weight of about 36 to about 105 g/cm², comprising at least three plies: two embossed external plies, lower and upper, each comprising patterns in relief consisting at least partly of discrete protuberances, and a central ply, wherein the distal surfaces of at least a part of the protuberances of each of said external plies are turned towards the central ply, and wherein at least one of the external folds has a pattern density higher than 30 protruberances/cm², wherein the lower embossed external ply (2) has a first (5) and a second (7) pattern, the second pattern having a height lower than the first pattern, **characterised in that** the central ply (4) and the upper embossed external ply (3) are associated with said lower embossed external ply (2) in a so-called "nested" manner, at the level of at least a part of the tips of the first pattern (5) of the lower embossed external ply (2).

2. The product according to Claim 1, **characterised in that** the three plies are connected by adhesive (11) at the level of the first pattern (5).

3. The product according to one of Claims 1 to 2, **characterised in that** each of the external embossed plies (2, 3) has a total density of patterns (5, 7, 9) of less than 150, preferably less than 90 protuberances/cm².

4. The product according to any of Claims 1 to 3, **characterised in that** the densities of the patterns (5, 7, 9) of the external embossed plies are different.

5. The product according to Claim 1, **characterised in that** the external embossed upper ply (3) comprises a second pattern with a height different from that of the pattern (9).

6. The product according to one of Claims 1 to 5, **characterised in that** the gram weight of the central ply (4) is different from the gram weight of at least one of the external embossed plies (2, 3).

7. The product according to any of Claims 1 to 6, **characterised in that** the fibrous and/or chemical composition of the central ply (4) is different from that of at least one of the external embossed plies (2, 3).

8. The product according to any of Claims 1 to 7, **characterised in that** at least one of the external embossed plies (2, 3) has a fibrous composition based essentially on short fibres, and **in that** the central ply (4) has a fibrous composition based essentially on long fibres.

9. The product according to any of Claims 1 to 8, **characterised in that** at least one of the external embossed plies (2, 3) comprises a softener.

10. The product according to any of Claims 1 to 9, **characterised in that** at least one of the plies comprises a hydrophobic agent.

11. The product according to any of Claims 1 to 10, **characterised in that** the central ply (4) comprises a temporary or permanent wet moisture resistant agent.

12. A method for manufacturing an absorbent paper according to any of Claims 1 to 11 and comprising at least three associated plies (2, 3, 4), wherein each of said plies has a gram weight of approximately 12 to approximately 35 g/m², and preferably 12 to 25 g/m², **characterised in that** it consists in:
- embossing a first external ply (2) on an embossing cylinder (13) having at least one relief pattern comprising, at least in part, of spikes with a height H1 to obtain, on the ply, a first pattern (5) consisting of protuberances (6);
- superimposing a central ply (4) on said protuberances (6) of the first external embossed ply (2);
- embossing a second external ply (3) on an embossing cylinder (20) having a relief pattern (9) comprising, at least in part, of spikes with a height h'1;
- associating the first external embossed ply (2), provided with the central ply (4), with the second external embossed ply (3), by means of a marrying cylinder (22), in a so-called "nested" manner; and
- exerting sufficient pressure to ensure the connection or binding of said aforementioned plies (2, 3, 4).

13. The method according to Claim 12, **characterised in that** an adhesive (11) is applied to the external surface of the central ply (4) opposite the distal surfaces of the first pattern (5) of the external embossed ply (2).

14. The method according to Claim 13, **characterised in that** the adhesive (11) is applied by means of a gluing device (15) comprising an applicator cylinder (16).

15. The method according to any of Claims 12 to 14, **characterised in that** the cylinder (13) presents a second pattern comprising spikes at a level h1 lower than the first of the height H1.

16. The method according to Claim 15, **characterised in that** the spikes of the first pattern on the cylinder (13) have an engraving height H1 of between 0.2 mm and 2 mm, and the spikes of the second pattern have an engraving height h1 that is such that the difference in height H1-h1 is between 0.1 mm and 0.7 mm.

17. The method according to Claim 12, **characterised in that** an aqueous or hot-melt adhesive is applied by spraying to provide the connection or binding between the plies.

18. Use of the product according to one of Claims 1 to 11, or obtained by the method according to one of Claims 12 to 17, as toilet paper, a table serviette, handkerchief, wiping down cloth or similar.

## Patentansprüche

1. Erzeugnis aus saugfähigem Papier mit einer Grammatur von etwa 36 bis etwa 105 g/m², das wenigstens drei Lagen aufweist, nämlich zwei äußere, untere und obere geprägte Lagen, die jeweils reliefartige Motive aufweisen, welche wenigstens teilweise aus einzelnen Vorsprüngen gebildet sind, sowie eine Mittellage, wobei die distalen Oberflächen wenigstens eines Teils der Vorsprünge jeder der äußeren Lagen zu der Mittellage hin gerichtet sind und wobei wenigstens eine der äußeren Lagen eine Motivdichte aufweist, die größer ist als 30 Vorsprünge/cm², wobei die untere geprägte äußere Lage (2) eine erstes Motiv (5) und ein zweites Motiv (7) aufweist, wobei das zweite Motiv eine Höhe aufweist, die geringer als die des ersten Motivs ist, **dadurch gekennzeichnet, dass** die Mittellage (4) und die obere geprägte äußere Lage (3) in einem so genannten "Verschachtelungs"-Modus mit der unteren geprägten äußeren Lage (2) im Bereich wenigstens eines Teils der Scheitel des ersten Motivs (5) der unteren geprägten äußeren Lage (2) verbunden sind.

2. Erzeugnis nach Anspruch 1, **dadurch gekennzeichnet, dass** die drei Lagen durch ein Klebemittel (11) im Bereich des ersten Motivs (5) verbunden sind.

3. Erzeugnis nach Anspruch 1 oder 2, **dadurch gekennzeichnet, dass** jede der geprägten äußeren Lagen (2, 3) eine Gesamtdichte der Motive (5, 7, 9) von weniger als 150, vorzugsweise weniger als 90 Vorsprünge/cm² aufweist.

4. Erzeugnis nach einem der Ansprüche 1 bis 3, **dadurch gekennzeichnet, dass** die Dichten der Motive (5, 7, 9) der geprägten äußeren Lagen unterschiedlich sind.

5. Erzeugnis nach Anspruch 1, **dadurch gekennzeichnet, dass** die obere geprägte äußere Lage (3) ein zweites Motiv mit einer Höhe aufweist, die von der des Motivs (9) verschieden ist.

6. Erzeugnis nach einem der Ansprüche 1 bis 5, **dadurch gekennzeichnet, dass** die Grammatur der Mittellage (4) von der Grammatur wenigstens einer der geprägten äußeren Lagen (2, 3) verschieden ist.

7. Erzeugnis nach einem der Ansprüche 1 bis 6, **dadurch gekennzeichnet, dass** die Faserzusammensetzung und/oder die chemische Zusammensetzung der Mittellage (4) von derjenigen wenigstens einer der geprägten äußeren Lagen (2, 3) verschieden ist.

8. Erzeugnis nach einem der Ansprüche 1 bis 7, **dadurch gekennzeichnet, dass** wenigstens eine der geprägten äußeren Lagen (2, 3) eine Faserzusammensetzung aufweist, die im Wesentlichen aus kurzen Fasern gebildet ist, und dass die Mittellage (4) eine Faserzusammensetzung aufweist, die im Wesentlichen aus langen Fasern gebildet ist.

9. Erzeugnis nach einem der Ansprüche 1 bis 8, **dadurch gekennzeichnet, dass** wenigstens eine der geprägten äußeren Lagen (2, 3) ein weichmachendes Mittel aufweist.

10. Erzeugnis nach einem der Ansprüche 1 bis 9, **dadurch gekennzeichnet, dass** wenigstens eine der Lagen ein hydrophobes Mittel aufweist.

11. Erzeugnis nach einem der Ansprüche 1 bis 10, **dadurch gekennzeichnet, dass** die Mittellage (4) einen vorübergehend oder dauerhaft feuchtigkeitsbeständigen Wirkstoff aufweist.

12. Verfahren zum Herstellen eines Erzeugnisses aus saugfähigem Papier nach einem der Ansprüche 1 bis 11 und das wenigstens drei verbundene Lagen (2, 3, 4) aufweist, wobei jede der Lagen eine Grammatur von etwa 12 bis etwa 35 g/m² und vorzugsweise von 12 bis 25 g/m² aufweist, **dadurch gekennzeichnet, dass** das Verfahren beinhaltet:
- Prägen einer ersten äußeren Lage (2) auf einem Prägezylinder (13), der wenigstens ein reliefartiges Motiv aufweist, das wenigstens teilweise aus Spitzen mit einer Höhe H1 gebildet ist, um auf der Lage ein erstes Motiv (5) zu erhalten, das aus Vorsprüngen (6) gebildet ist;
- Auflegen einer Mittellage (4) auf die Vorsprünge (6) der ersten geprägten äußeren Lage (2);
- Prägen einer zweiten äußeren Lage (3) auf einem Prägezylinder (20), der ein reliefartiges Motiv (9) aufweist, das wenigstens teilweise aus Spitzen mit einer Höhe h'1 gebildet ist;
- Zusammenbringen der ersten geprägten äußeren Lage (2), die mit der Mittellage (4) versehen ist, und der zweiten geprägten äußeren Lage (3) mittels eines Vereinigungszylinders (22) gemäß einem "Verschachtelungs"-Modus; und
- Ausüben eines hinreichend starken Drucks, um die Verbindung der drei Lagen (2, 3, 4) sicherzustellen.

13. Verfahren nach Anspruch 12, **dadurch gekennzeichnet, dass** ein Klebemittel (11) auf die äußere Oberfläche der Mittellage (4) gegenüber den distalen Oberflächen des ersten Motivs (5) der unteren geprägten äußeren Lage (2) aufgebracht wird.

14. Verfahren nach Anspruch 13, **dadurch gekennzeichnet, dass** das Klebemittel (11) mittels einer Klebevorrichtung (15) aufgebracht wird, die einen Auftragezylinder (16) aufweist.

15. Verfahren nach einem der Ansprüche 12 bis 14, **dadurch gekennzeichnet, dass** der Zylinder (13) ein zweites Motiv aufweist, das aus Spitzen mit einer Höhe h1 gebildet ist, die kleiner sind als die ersten mit der Höhe H1.

16. Verfahren nach Anspruch 15, **dadurch gekennzeichnet, dass** die Spitzen des ersten Motivs auf dem Zylinder (13) eine Stichhöhe H1 zwischen 0,2 mm und 2 mm aufweisen und dass die Spitzen des zweiten Motivs eine Stichhöhe h1 aufweisen, so dass die Höhendifferenz H1-h1 zwischen 0,1 mm und 0,7 mm beträgt.

17. Verfahren nach Anspruch 12, **dadurch gekennzeichnet, dass** ein wässriges Klebemittel oder ein Heißklebemittel durch Sprühen aufgebracht wird, um die Verbindung zwischen den Lagen oder Schichten sicherzustellen.

18. Verwendung des Erzeugnisses nach einem der Ansprüche 1 bis 11 oder als Produkt des Verfahrens nach einem der Ansprüche 12 bis 17 als Toilettenpapier, Tischserviette, Taschentuch, Küchenpapier oder dergleichen.
